# EUROPEAN PATENT SPECIFICATION

(11) **EP 2 433 851 B1**
(45) Date of publication and mention of the grant of the patent: **09.01.2013**
(21) Application number: 11177650.6
(22) Date of filing: 16.08.2011
(51) Int. Cl.: B62D 25/10

(54) **Vehicular closure**
Fahrzeugverschluss
Fermeture de véhicule

(30) Priority: 27.09.2010 JP 2010215884
(43) Date of publication of application: 28.03.2012
(73) Proprietor: Honda Motor Co., Ltd., Tokyo 107-8556 (JP)
(72) Inventor: Kihara, Makoto, Saitama, 351-0193 (JP); Sasaki, Yasuo, Kanagawa 224-0057 (JP)
(74) Representative: Prechtel, Jörg

(56) References cited:
- EP-A2- 1 695 855
- DE-A1- 10 259 981
- DE-A1-102008 028 057
- DE-A1-102009 005 910
- US-A1- 2005 001 452

## Description

The present invention relates to a vehicular closure pivotably attached to an opening portion of an engine compartment for opening and closing the opening portion.

Vehicles have openings formed at tops of engine compartments or boots. These openings are opened or closed by pivotal movement of closures on hinges provided at sides of passenger compartments of the vehicles. The closures include bonnets as disclosed in JP-U-H07-2367 B.

JP-U-H07-2367 B discloses a bonnet pivotably attached to a top of an engine compartment. The bonnet includes a base member or outer panel and an inner panel applied to the outer panel for reinforcing the outer panel.

The engine compartment has stoppers projecting toward the bonnet. The inner panel includes stopper abutting portions provided on a distal end thereof for abutment on the stoppers to lessen impact on the inner panel when the bonnet pivots to close the engine compartment.

A vehicular body may be subjected to an impact force from a lower part thereof when the bonnet closes the engine compartment with the stopper abutting portions abutting on the stoppers. The impact force may be transmitted through the stoppers to the stopper abutting portions of the inner panel. It is desirable to mitigate the impact force exerted on the stopper abutting portion.

US 2005/0001452 A1 discloses an integral vehicle front assembly.

An object of the present invention is to provide a vehicular closure designed to mitigate impact on stopper abutting portions of the closure.

According to one aspect of the present invention, there is provided a vehicular closure movable between an open position to open an opening portion formed in a vehicle body and a closed position to close the opening portion, the closure comprising: an outer panel; and an inner panel lying on and attached, to the outer panel for reinforcing the outer panel; the inner panel including: a planar portion extending along a back side of the outer panel; a bead portion formed on the planar portion for reinforcing the planar portion; a stopper abutting portion projecting from the planar portion toward the opening portion to abut on a stopper of the vehicle body when the closure is in the closed position; and the bead portion extending toward the stopper abutting portion.

The bead portion has a channel-shape and extends toward the stopper abutting portion. With this arrangement, an impact force transmitted from the stopper to the stopper abutting portion is dispersed into the bead portion. The dispersion of the impact force mitigates impact on the stopper abutting portion upon the transmission of the impact force to the stopper abutting portion.

The bead portion is provided in at least two, and the two bead portions include a first bead portion and a second bead portion. The first bead portion has a longitudinal axis thereof, and the second bead portion has a longitudinal axis thereof. The stopper abutting portion is disposed at an intersection of the longitudinal axis of the first bead portion and the longitudinal axis of the second bead portion.

The stopper abutting portion is disposed at a high rigid location proximate to the first and second bead portions. The stopper abutting portion, which is disposed at the high rigid location, is secure against deformation.

In a preferred form of the present invention, the longitudinal axis of the first bead portion and the longitudinal axis of the second bead portion intersect at an acute angle. The inner panel further includes an interconnecting portion having a curved configuration and interconnecting one end of the first bead portion and one end of the second bead portion.

The curved interconnecting portion of the inner panel lessens impact on some object when the object collides with the outer panel because an impact force exerted by the object on the inner panel during the collision is dispersed through the curved interconnecting portion.

In a further preferred form of the present invention, the one end of the first bead portion is connected to the stopper abutting portion, and the interconnecting portion flares from the one end of the second bead portion to the one end of the first bead portion.

Only the one end of the first bead portion is connected to the stopper abutting portion with a limited location around the stopper abutting portion taken into consideration. More specifically, the one end of the first bead portion is connected to the stopper abutting portion while the one end of the second bead portion is connected to the interconnecting portion. This arrangement of the first and second bead portions facilitates forming of the inner panel. In addition, the inner panel thus formed has sufficient strength at the location near the stopper abutting portion.

Preferably, the interconnecting portion has an assemblage aperture formed therein for use in assembling the inner panel.

The assemblage aperture, which is formed in the interconnecting portion of high rigid, can be used to assemble the inner panel without deforming the inner panel.

In addition, the assemblage aperture, which is formed in a wider area of the flaring interconnecting portion, may have any selected size.

In a further preferred form of the present invention, the planar portion includes an open window and a peripheral edge defining the window, and the bead portion is disposed along the peripheral edge.

The inner panel, which includes the open window, has a lower weight. The bead portion, which is disposed along the peripheral edge, compensates rigidity of the inner panel which would be otherwise reduced due to the window. Namely, the inner panel has the lower weight and higher rigidity.

In a further preferred form of the present invention, the planar portion includes an open window and a peripheral edge defining the window, and the first bead portion and the second bead portion are disposed along the peripheral edge. The peripheral edge has an abutting part abutting on the outer panel and a projecting part disposed proximate the interconnecting portion and projecting in a direction away from the outer panel.

The projecting part is disposed at a high rigid location proximate to the interconnecting portion. The projecting part is spaced apart from the outer panel so as to allow the outer panel to deform absorbing impact force exerted by some object on the outer panel when the object collides with the outer panel. The absorption of the impact force mitigates impact on the object upon the collision.

In a further preferred form of the present invention, the stopper abutting portion has a projecting wall extending from the planar portion toward the opening portion when the closure is in the closed position, and a seat surface extending from a distal end of the projecting wall along an abutting surface of the stopper and abutting on the abutting surface when the closure is in the closed position, and the bead portion project from the planar portion toward the opening portion when the closure is in the closed position. The bead portion has one end connected to the projecting wall.

The stopper abutting portion and the bead portion, which project in the same direction, are easy to form.

A preferred embodiment of the present invention will be described in detail below, by way of example only, with reference to the accompanying drawings, in which:
Fig. 1 is a front elevation view of a vehicle having a closure according to the present invention;
Fig. 2 is a perspective view of an inner panel shown in Fig.1;
Fig. 3 is an enlarged view of a relevant part of the inner panel;
Fig. 4A and Fig. 4B are views of first and second bead portions and an interconnecting portion of the inner panel shown in Fig. 2;
Fig. 5 is a cross-sectional view taken along line 5-5 of Fig. 2;
Fig. 6 is a cross-sectional view taken along line 6-6 of Fig. 2;
Fig. 7 is a view showing function of the inner panel of Fig. 3 when the inner panel is subjected to impact; and
Fig. 8A is a view showing the inner panel hung from a conveyor during assemblage of the inner panel and Fig. 8B is a view showing the inner panel being attached to the outer panel.

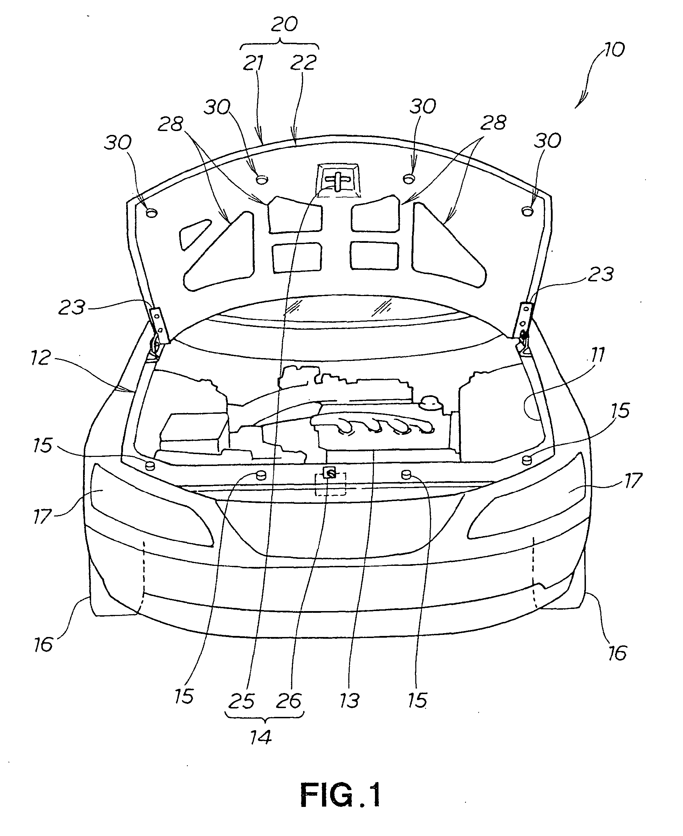

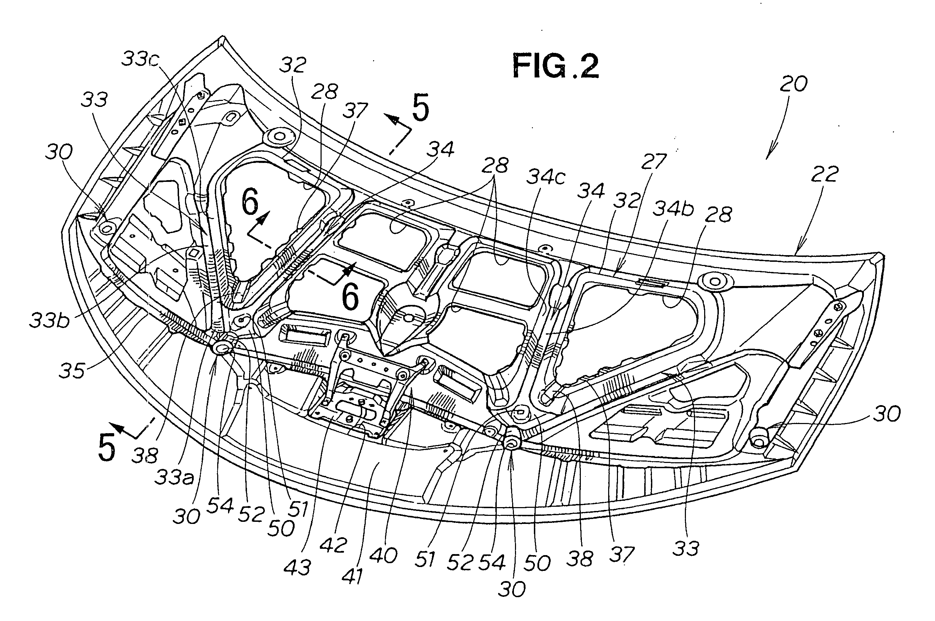

Referring to Fig. 1, a bonnet 20, which is a vehicular closure, is in an open position to open an engine compartment 11 provided at a front part of a vehicle body 10. Turning to Fig. 2, the bonnet 20 is shown in a closed position to close the engine compartment 11 with an outer panel 21 of the bonnet 20 removed for convenience in illustrating an inner panel 22 of the bonnet 20.

The engine compartment 11 of the vehicle body 10 has an opening portion 11 at a top thereof. The engine compartment 11 accommodates therein an engine 13.

Disposed forward of the opening portion 11 of the engine compartment 11 is a locking mechanism 14 for locking the bonnet 20. Located near the locking mechanism 14 are plural stoppers 15 projecting upward and configured to abut on the bonnet 20 for supporting the bonnet 20. Reference numerals 16, 17 denote a front wheel and a head light, respectively. The bonnet 20, which is movable between the open position to open the opening portion 11 and the closed position to close the opening portion 11, is made from a steel sheet or a metal sheet of light alloy etc.

The bonnet 20 includes the outer panel 21 and the inner panel 22 joined to the entire back side of the outer panel 21 for reinforcing the outer panel 21. Provided at ends of the inner panel 22 on a side of a passenger compartment of the vehicle body 10 are hinges 23, 23 arranged to allow the movement of the bonnet 20 between the open position and the closed position.

Disposed distally of the inner panel 22 is a bonnet striker 25 configured to engage a latch 26 disposed on a front side of the engine compartment 12. The bonnet striker 25 and the latch 26 form the locking mechanism 14 discussed above.

The inner panel 22 includes a planar portion 27 having a plurality of open windows 28, and a plurality of stopper abutting portions 30 projecting toward the opening portion 11 to abut on the stoppers 15 when the bonnet 20 is in the closed position.

Each of the windows 32 is defined by a peripheral edge 32 along which first and second bead portions 33, 34 are disposed. The inner panel 22 includes a bendable portion 35 extending transversely of the planar portion 27. The first and second bead portions 33, 34 reinforce the planar portion 27. The bendable portion 35 is bent to absorb impact which the vehicle body 10 is subjected to at its front side upon colliding with some object.

The stopper abutting portions 30, 30 project from portions of the bendable portion 35 toward the opening portion 11. The first beads 33, 33 and the second beads 34, 34 extend toward the stopper abutting portions 30, 30.

The inner panel 22, which includes the open window 28, has its lower weight. The first and second bead portions 33, 34, which are disposed along the peripheral edge 32, compensates rigidity of the inner panel 22 which would be otherwise reduced due to the provision of the windows 28. That is, the inner panel 22 has the lower weight and higher rigidity.

The peripheral edge 32 has an abutting part 37 abutting on the outer panel 21, and a projecting part 38 projecting in a direction away from the outer panel 21.

The inner panel 22 includes a distal part 41 located forward of the bendable portion 35. The distal part 41 is recessed toward the engine compartment 11. The distal part 41 of the inner panel 22 includes an attachment portion 42 to which is attached the bonnet striker 25. More specifically, the bonnet striker 25 is attached via a striker stiffener 43 to the attachment portion 42.

The attachment portion 42 is recessed toward the engine compartment 11. This recessed portion 42, which is higher in rigidity, is positioned lower than the bendable portion 35. That is, the recessed attachment portion 42 is located at a different level than the bendable portion 35. The high rigid attachment portion 42, which is located lower than the bendable portion 35, ensures that the bendable portion 35 is bent to absorb impact which the vehicle body 10 is subject to upon colliding head-on with some object.

The inner panel 22 includes a reinforcing member 40 extending rearward from a rear end of the attachment portion 42.

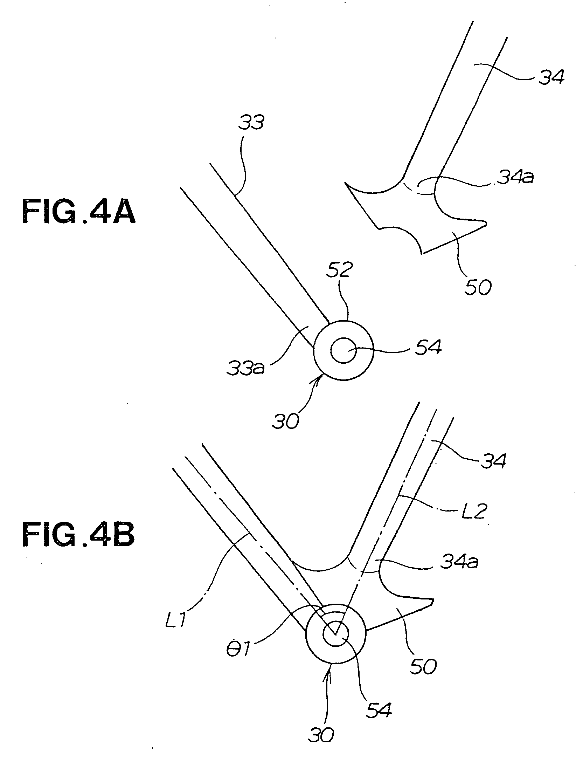

The first and second beads 33, 34 will be described with reference to Fig. 4A and Fig. 4B.

As shown in Fig. 4A, the first bead portion 33 has one end 33a connected to the stopper abutting portion 30. The second bead portion 34 has one end 34a connected to an interconnecting portion 50. The interconnecting portion 50 flares from the one end 34a of the second bead portion 34 to the one end 33a of the first bead portion 33.

As shown in Fig. 4B, the second bead portion 34 with the one end 34a connected to the interconnecting portion 50 is brought into connection to both the one end 33a of the first bead portion 33 and the stopper abutting portion 30. That is, the first and second bead portions 33, 34, the interconnecting portion 50 and the stopper abutting portion 30 come together.

The stopper abutting portion 30 is disposed on an intersection of a longitudinal axis L1 of the first bead portion 33 and a longitudinal axis L2 of the second bead portion 34. The axis L1 and the axis L2 intersect at an acute angle *θ* 1 .

It is desirable that the intersection of the longitudinal axis L1 and the longitudinal axis L2 lies on the bendable portion 35 (Fig. 2).

The stopper abutting portion 30 is formed at a rigid location near the first and second bead portions 33, 34. The rigidity of the location near the bead portions 33, 34 is sufficient to prevent deformation of the stopper abutting portion 30.

With a limited location around the stopper abutting portion 30 taken into consideration, the first bead portion 33 is connected directly to the stopper abutting portion 30 while the second bead portion 34 is connected directly to not the stopper abutting portion 30 but the interconnecting portion 50. This arrangement of the first and second bead portions 33, 34 facilitates forming of the inner panel 22. In addition, the inner panel 22 thus formed has sufficient strength at the location near the stopper abutting portion 30.

The interconnecting portion 50 flares from the one end 34a of the second bead portion 34, connecting to the one end 33a of the first bead portion 33. The interconnecting portion 50 has a curve interconnecting the one end 33a and the one end 34a.

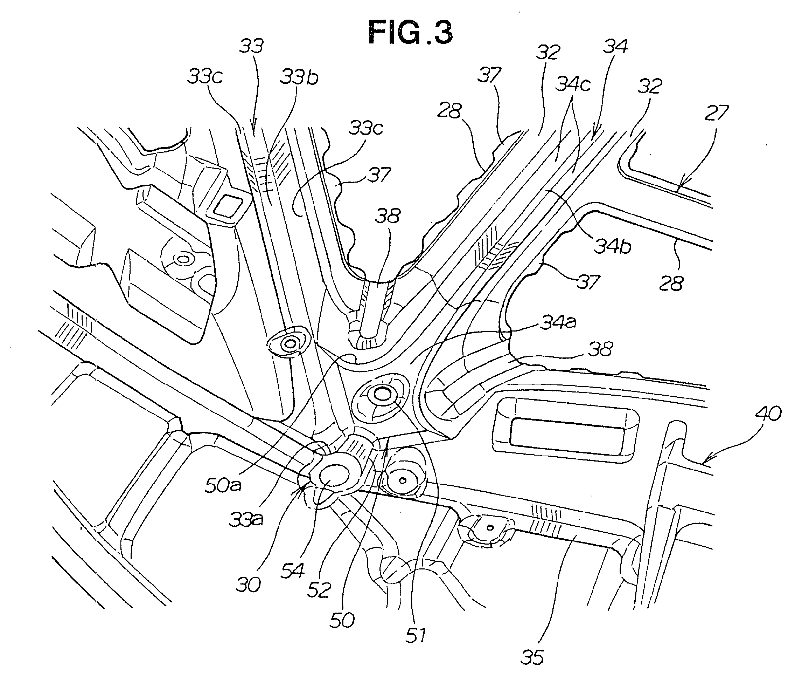

Referring back to Fig. 3, the projecting part 38 is disposed at a location proximate to the interconnecting portion 50. The proximate location is high in rigidity, and spaced apart from the outer panel 21 (Fig. 1) so as to allow the outer panel 21 to deform absorbing impact force exerted by some object on the outer panel 21 when the object collides with the outer panel 21. The absorption of the impact force lessens impact on the object upon the collision.

The interconnecting portion 50 has an assemblage aperture 51 formed centrally thereof for use in assembling the outer and inner panels 21, 22 together, as will be discussed later.

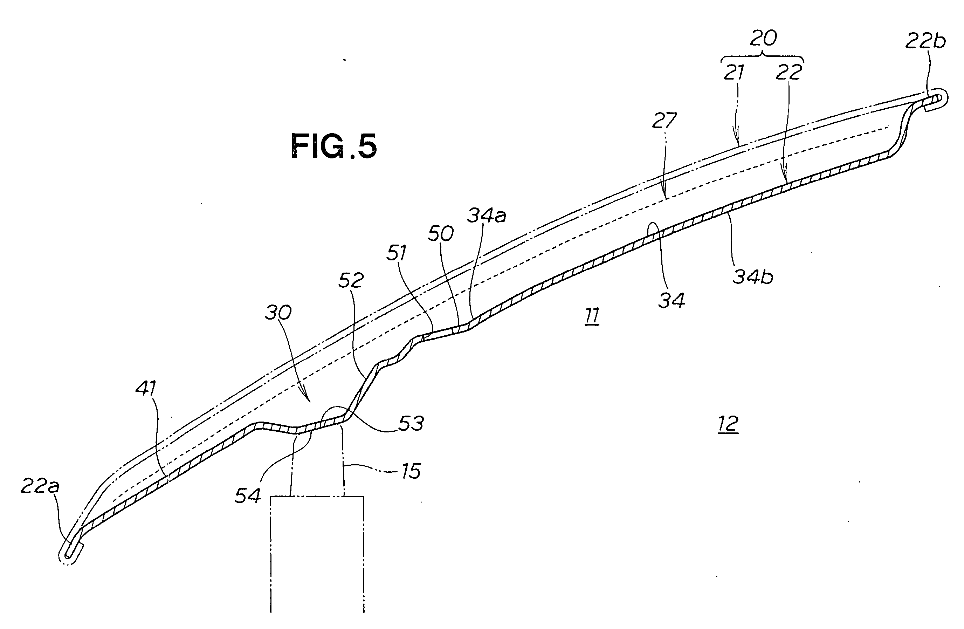

The stopper abutting portion 30 will be described with reference to Fig. 5.

The inner panel 22 is seamed with the outer panel 21 with opposite ends 22a, 22a of the inner panel 21 joined to the outer panel 21.

The stopper abutting portion 30 includes a projecting wall 52 projecting from the planar portion 27 toward the opening portion 11, and a seat surface 54 extending from a distal end of the projecting wall 52 along an abutting surface 53 of the stopper 15 and abutting on the abutting surface 53.

The projecting wall 52 is connected through the interconnecting portion 50 to the one end 34a of the second bead portion 34.

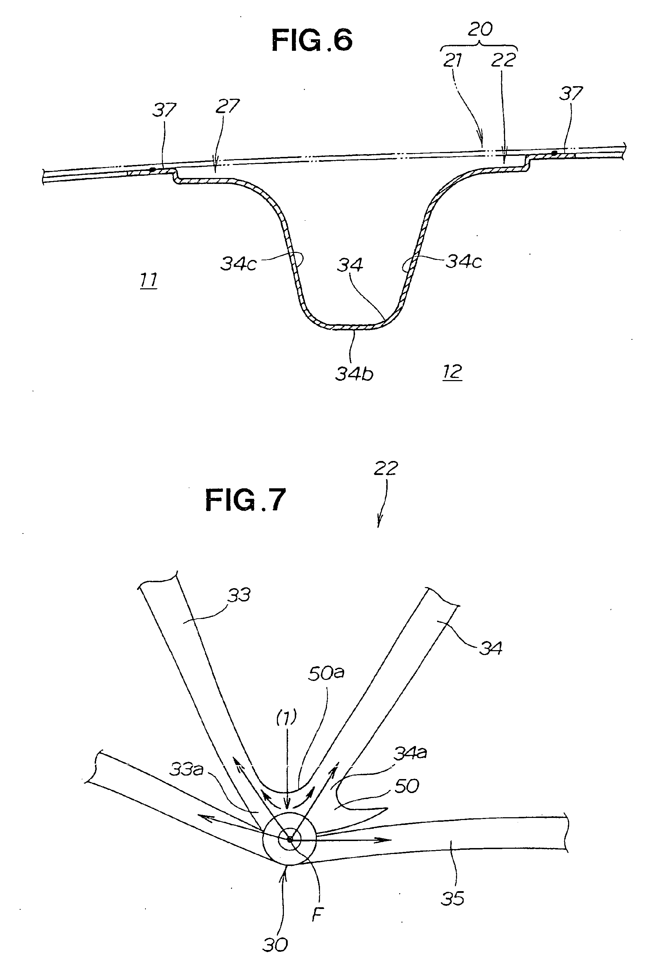

As shown in Fig. 6, the second bead portion 34 projects from the planar portion 27 toward the opening portion 11. The second bead portion 34 has a bottom surface 34b and opposing side walls 34c, 34c extending obliquely upward from the bottom surface 34b. The bottom and the side walls 34c, 34c define a bowl-shaped cross-section of the second bead portion 34. The side walls 34c, 34c have their tops connected to the planar portion 27.

The first bead portion 33 shown in Fig. 3 is the same in structure as the second bead portion 34. That is, the first bead portion 33 projects from the planar portion 27 toward the opening portion 11. The first bead portion 33 has one end connected to the projecting wall 52 of the stopper abutting portion 30. The first bead portion 33 has a bottom surface 33b and opposing side walls 33c, 33c extending obliquely upward from the bottom surface 33b.

The stopper abutting portion 30 projects from the planar portion 27 toward the opening portion 11, as do the bead portions 33, 34. This means that the stopper abutting portion 30 and the bead portions 33, 34 project in the same direction. The stopper abutting portion 30 and the bead portions 33, 34, which project in the same direction, are easy to form.

Description will be made as to function of the inner panel 22 below.

As shown in Fig. 7, the stopper abutting portion 30 may be subjected to an impact force F from the stopper 15 (Fig. 5). The force F transmitted to the stopper abutting portion 30 is dispersed into the bead portions 33, 34, which extend toward the stopper abutting portion 30, as well as into the bendable portion 35, which is connected to the stopper abutting portion 30. The dispersion of the impact force F lessens impact on the stopper abutting portion 30 when the impact force F is applied to the stopper abutting portion 30.

Some object may fall and collide with the outer panel 22 (Fig. 5) in which case an impact force acts on a location proximate to the interconnecting portion 50, as indicated by an arrow (1) of Fig. 7.

The impact force acting on the proximate location is dispersed through the curve 50a of the interconnecting portion 50 interconnecting the one end 33a of the first bead portion 33 and the one end 34a of the second bead portion 34. The dispersion of the impact force lessens impact on the object upon the collision.

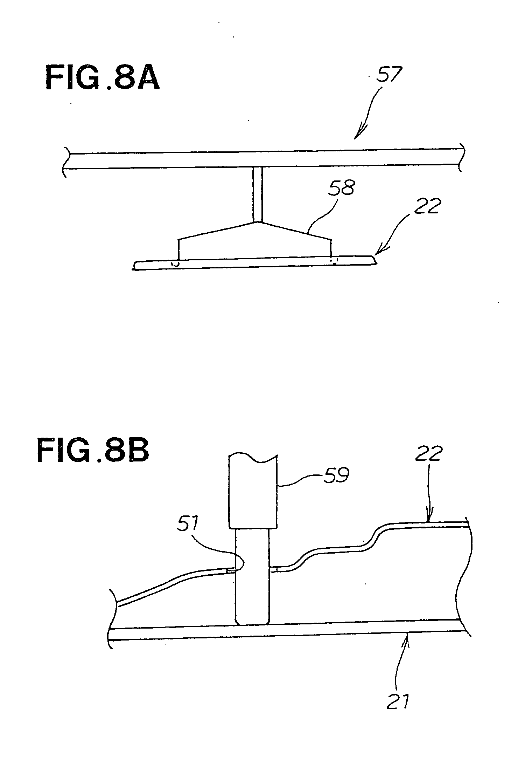

As shown in Figs. 8A, the inner panel 22 is caught on a hanger 58 of a conveyor 57 with hooks of the hanger 58 fitted in the assemblage aperture 51 during conveyance of the inner panel 22. Referring to Fig. 8B, a jig 59 is inserted through the assemblage aperture 51, clamping the inner panel 22 for attachment to the outer panel 22. That is, the assemblage aperture 51 is used in assembling the inner panel 22.

The assemblage aperture 51 is formed in the interconnecting portion 50 (as shown in Fig. 3). The assemblage aperture 51, which is formed in the interconnecting portion 50 of high rigidity, can be used to assemble the inner panel 22 without deforming the inner panel 22.

The closure according to the present invention has been described as the bonnet provided at the front part of the vehicle body. However, the closure may be a boot lid for opening and closing a boot formed at a rear part of the vehicle body.

The closure of the present invention is suited for use as a bonnet for opening and closing the opening portion of the engine compartment.

A vehicular closure (20) includes outer and inner panels (21, 22). The inner panel (22) includes a planar portion (27) extending along a back side of the outer panel (21), a bead portion (33;34) formed on the planar portion (27) for reinforcing the planar portion (27), a stopper abutting portion (30) projecting from the planar portion (27) toward an opening portion (11) of a vehicle body (10) to abut on a stopper (15) of the vehicle body (10) when the closure (20) closes the opening portion (11). The bead portion (33;34) extends toward the stopper abutting portion.

## Claims

1. A vehicular closure (20) pivotably attached to an opening potion (11) of an engine compartment and movable between an open position to open the opening portion (11) formed in a vehicle body (10) and a closed position to close the opening portion (11), the closure (20) comprising:
an outer panel (21) ; and
an inner panel (22) lying on and attached to the outer panel (21) for reinforcing the outer panel (21);
the inner panel (22) including:
a planar portion (27) extending along a back side of .the outer panel (21); and
a stopper abutting portion (30) projecting from the planar portion (27) toward the opening portion (11) to abut on a stopper (15) of the vehicle body (10) when the closure (20) is in the closed position; **characterized in that**
the inner panel (22) includes a bead portion (33; 34) formed on the planar portion (27) for reinforcing the planar portion (27); and
the bead portion (33; 34) extends toward the stopper abutting portion (30), wherein the bead portion (33; 34) is provided in at least two portions, the two bead portions including a first bead portion (33) and a second bead portion (34), the first bead portion (33) having a longitudinal axis (L1) thereof, the second bead portion (34) having a longitudinal axis (L2) thereof, the stopper abutting portion (30) being disposed at an intersection of the longitudinal axis (L1) of the first bead portion (33) and the longitudinal axis (L2) of the second bead portion (34).

2. The closure of claim 1, wherein the longitudinal axis (L1) of the first bead portion (33) and the longitudinal axis (L2) of the second bead portion (34) intersect at an acute angle, the inner panel (22) further including an interconnecting portion (50) having a curved configuration and interconnecting one end (33a) of the first bead portion (33) and one end (34a) of the second bead portion (34).

3. The closure of claim 2, wherein the one end (33a) of the first bead portion (33) is connected to the stopper abutting portion (30), the interconnecting portion (50) flaring from the one end (34a) of the second bead portion (34) to the one end (33a) of the first bead portion (33).

4. The closure of claim 3, wherein the interconnecting portion (50) has an assemblage aperture (51) formed therein for use in assembling the inner panel (22).

5. The closure of any one of claims 1 to 4, wherein the planar portion (27) includes an open window (28) and a peripheral edge (32) defining the window (32), the bead portion (33; 34) being disposed along the peripheral edge (32).

6. The closure of any one of claims 2 to 4, wherein the planar portion (27) includes an open window (28) and a peripheral edge (32) defining the window (28), the first bead portion (33) and the second bead portion (34) being disposed along the peripheral edge (32), the peripheral edge (32) having an abutting part (37) abutting on the outer panel (21) and a projecting part (38) disposed proximate the interconnecting portion (50) and projecting in a direction away from the outer panel (21).

7. The closure of any one of claims 1 to 6, wherein the stopper abutting portion (30) has a projecting wall (52) extending from the planar portion (27) toward the opening portion (11) when the closure (20) is in the closed position, and a seat surface (54) extending from a distal end of the projecting wall (52) along an -abutting surface (53) of the stopper (15) and abutting on the abutting surface (53) when the closure (20) is in the closed position, the bead portion (33;34) projecting from the planar portion (27) toward the opening portion (11) when the closure (20) is in the closed position, the bead portion (33;34) having one end (33a;34a) connected to the projecting wall (52).

## Patentansprüche

1. Fahrzeugverschließeinrichtung (20), welche schwenkbar an einem Öffnungsabschnitt (11) von einem Motorraum angebracht ist und zwischen einer offenen Position, um den Öffnungsabschnitt (11) zu öffnen, welcher in einem Fahrzeugkörper (10) ausgebildet ist, und einer geschlossenen Position, um den Öffnungsabschnitt (11) zu schließen, beweglich ist, wobei die Verschließeinrichtung (20) umfasst:
eine äußere Platte (21); und
eine innere Platte (22), welche an der äußeren Platte (21) anliegt und
an dieser angebracht ist, um die äußere Platte (21) zu verstärken;
wobei die innere Platte (22) umfasst:
einen planaren Abschnitt (27), welcher sich entlang einer Rückseite von der äußeren Platte (21) erstreckt; und
einen Anschlaganlageabschnitt (30), welcher von dem planaren Abschnitt (27) zu dem Öffnungsabschnitt (11) hin vorsteht, um an einem Anschlag (15) von dem Fahrzeugkörper (10) anzuliegen, wenn die Verschließeinrichtung (20) in der geschlossenen Position ist;
**dadurch gekennzeichnet, dass**
die innere Platte (22) einen Wulstabschnitt (33; 34) umfasst, welcher auf dem planaren Abschnitt (27) ausgebildet ist, um den planaren Abschnitt (27) zu verstärken; und
sich der Wulstabschnitt (33; 34) zu dem Anschlaganlageabschnitt (30) hin erstreckt, wobei der Wulstabschnitt (33; 34) in wenigstens zwei Abschnitten vorgesehen ist, wobei die zwei Wulstabschnitte einen ersten Wulstabschnitt (33) und einen zweiten Wulstabschnitt (34) umfassen, wobei der erste Wulstabschnitt (33) eine Längsachse (L1) davon hat, der zweite Wulstabschnitt (34) eine Längsachse (L2) davon hat, und der Anschlaganlageabschnitt (30) an einem Schnittpunkt von der Längsachse (L1) von dem ersten Wulstabschnitt (33) und der Längsachse (L2) von dem zweiten Wulstabschnitt (34) angeordnet ist.

2. Verschließeinrichtung nach Anspruch 1, wobei die Längsachse (L1) von dem ersten Wulstabschnitt (33) und die Längsachse (L2) von dem zweiten Wulstabschnitt (34) sich in einem spitzen Winkel schneiden, wobei die innere Platte (22) ferner einen Verbindungsabschnitt (50) umfasst, welcher eine gekrümmte Konfiguration hat und ein Ende (33a) von dem ersten Wulstabschnitt (33) und ein Ende (34a) von dem zweiten Wulstabschnitt (34) miteinander verbindet.

3. Verschließeinrichtung nach Anspruch 2, wobei das eine Ende (33a) von dem ersten Wulstabschnitt (33) mit dem Anschlaganlageabschnitt (30) verbunden ist, wobei sich der Verbindungsabschnitt (50) von dem einen Ende (34a) von dem zweiten Wulstabschnitt (34) zu dem einen Ende (33a) von dem ersten Wulstabschnitt (33) hin aufweitet.

4. Verschließeinrichtung nach Anspruch 3, wobei der Verbindungsabschnitt (50) eine Montageöffnung (51) hat, welche darin zur Verwendung bei der Montage der inneren Platte (22) ausgebildet ist.

5. Verschließeinrichtung nach einem der Ansprüche 1 bis 4, wobei der planare Abschnitt (27) ein offenes Fenster (28) und einen Umfangsrand (32) umfasst, welcher das Fenster (32) definiert, wobei der Wulstabschnitt (33; 34) längs des Umfangsrands (32) angeordnet ist.

6. Verschließeinrichtung nach einem der Ansprüche 2 bis 4, wobei der planare Abschnitt (27) ein offenes Fenster (28) und einen Umfangsrand (32) umfasst, welcher das Fenster (28) definiert, wobei der erste Wulstabschnitt (33) und der zweite Wulstabschnitt (34) längs des Umfangsrands (32) angeordnet sind, der Umfangsrand (32) ein Anlageteil (37) hat, welches an der äußeren Platte (21) anliegt, und ein vorstehendes Teil (38) hat, welches nahe dem Verbindungsabschnitt (50) angeordnet ist und in eine Richtung weg von der äußeren Platte (21) vorsteht.

7. Verschließeinrichtung nach einem der Ansprüche 1 bis 6, wobei der Anschlaganlageabschnitt (30) eine vorstehende Wand (52) hat, welche sich von dem planaren Abschnitt (27) zu dem Öffnungsabschnitt (11) hin erstreckt, wenn die Verschließeinrichtung (20) in der geschlossenen Position ist, und eine Sitzfläche (54) hat, welche sich von einem distalen Ende von der vorstehenden Wand (52) entlang einer Anlagefläche (53) von dem Anschlag (15) erstreckt und an der Anlagefläche (53) anliegt, wenn die Verschließeinrichtung (20) in der geschlossenen Position ist, wobei der Wulstabschnitt (33; 34) von dem planaren Abschnitt (27) zu dem Öffnungsabschnitt (11) hin vorsteht, wenn die Verschließeinrichtung (20) in der geschlossenen Position ist, wobei der Wulstabschnitt (33; 34) ein Ende (33a; 34a) hat, welches mit der vorstehenden Wand (52) verbunden ist.

## Revendications

1. Fermeture de véhicule (20) fixée de manière pivotante à une partie d'ouverture (11) d'un compartiment de moteur et mobile entre une position ouverte pour ouvrir la partie d'ouverture (11) formée dans une carrosserie de véhicule (10) et une position fermée pour fermer la partie d'ouverture (11), la fermeture (20) comprenant :
un panneau externe (21) ; et
un panneau interne (22) se trouvant sur et fixé au panneau externe (21) pour renforcer le panneau externe (21) ;
le panneau interne (22) comprenant :
une partie plane (27) s'étendant le long d'un côté arrière du panneau externe (21) ; et
une partie de butée de butoir (30) faisant saillie de la partie plane (27) vers la partie d'ouverture (11) pour venir en butée sur un butoir (15) de la carrosserie de véhicule (10) lorsque la fermeture (20) est dans la position fermée ; **caractérisée en ce que**
le panneau interne (22) comprend une partie de bourrelet (33 ; 34) formée sur la partie plane (27) pour renforcer la partie plane (27) ; et
la partie de bourrelet (33 ; 34) s'étend vers la partie de butée de butoir (30), dans laquelle la partie de bourrelet (33 ; 34) est prévue en au moins deux parties, les deux parties de bourrelet comprenant une première partie de bourrelet (33) et une seconde partie de bourrelet (34), la première partie de bourrelet (33) ayant son axe longitudinal (L1), la seconde partie de bourrelet (34) ayant son axe longitudinal (L2), la partie de butée de butoir (30) étant disposée à une intersection de l'axe longitudinal (L1) de la première partie de bourrelet (33) et l'axe longitudinal (L2) de la seconde partie de bourrelet (34).

2. Fermeture selon la revendication 1, dans laquelle l'axe longitudinal (L1) de la première partie de bourrelet (33) et l'axe longitudinal (L2) de la seconde partie de bourrelet (34) se coupent à un angle aigu, le panneau interne (22) comprenant en outre une partie d'interconnexion (50) ayant une configuration incurvée et interconnectant une extrémité (33a) de la première partie de bourrelet (33) et une extrémité (34a) de la seconde partie de bourrelet (34).

3. Fermeture selon la revendication 2, dans laquelle la première extrémité (33a) de la première partie de bourrelet (33) est raccordée à la partie de butée de butoir (30), la partie d'interconnexion (50) s'évasant à partir de la première extrémité (34a) de la seconde partie de bourrelet (34) jusqu'à la première extrémité (33a) de la première partie de bourrelet (33).

4. Fermeture selon la revendication 3, dans laquelle la partie d'interconnexion (50) a une ouverture d'assemblage (51) formée à l'intérieur de cette dernière, pour être utilisée afin d'assembler le panneau interne (22).

5. Fermeture selon l'une quelconque des revendications 1 à 4, dans laquelle la partie plane (27) comprend une fenêtre ouverte (28) et un bord périphérique (32) définissant la fenêtre (32), la partie de bourrelet (33 ; 34) étant disposée le long du bord périphérique (32).

6. Fermeture selon l'une quelconque des revendications 2 à 4, dans laquelle la partie plane (27) comprend une fenêtre ouverte (28) et un bord périphérique (32) définissant la fenêtre (28), la première partie de bourrelet (33) et la seconde partie de bourrelet (34) étant disposées le long du bord périphérique (32), le bord périphérique (32) ayant une partie de butée (37) venant en butée sur le panneau externe (21) et une partie en saillie (38) disposée à proximité de la partie d'interconnexion (50) et faisant saillie dans une direction à distance du panneau externe (21).

7. Fermeture selon l'une quelconque des revendications 1 à 6, dans laquelle la partie de butée de butoir (30) a une paroi en saillie (52) s'étendant à partir de la partie plane (27) vers la partie d'ouverture (11) lorsque la fermeture (20) est dans la position fermée, et une surface de siège (54) s'étendant à partir d'une extrémité distale de la paroi en saillie (52) le long d'une surface de butée (53) du butoir (15) et venant en butée sur la surface de butée (53) lorsque la fermeture (20) est dans la position fermée, la partie de bourrelet (33 ; 34) faisant saillie de la partie plane (27) vers la partie d'ouverture (11) lorsque la fermeture (20) est dans la position fermée, la partie de bourrelet (33 ; 34) ayant une extrémité (33a ; 34a) raccordée à la paroi en saillie (52).
